# EUROPÄISCHE PATENTSCHRIFT

(11) **EP 3 088 359 B1**
(45) Veröffentlichungstag und Bekanntmachung des Hinweises auf die Patenterteilung: **12.09.2018**
(21) Anmeldenummer: 15165339.1
(22) Anmeldetag: 28.04.2015
(51) Int. Cl.: C01B 33/107

(54) **VERFAHREN ZUR HERSTELLUNG VON OCTACHLORTRISILAN UND HÖHERER POLYCHLORSILANE UNTER VERWERTUNG VON HEXACHLORDISILAN**
METHOD FOR THE PREPARATION OF OCTACHLORTRISILANE AND HIGHER POLYCHLORSILANES USING HEXACHLORODISILANE
PROCÉDÉ DE PRODUCTION D'OCTACHLOROTRISILANE ET POLYCHLOROSILANE SUPÉRIEURS FAISANT APPEL À L'HEXACHLORODISILANE

(43) Veröffentlichungstag der Anmeldung: 02.11.2016
(73) Patentinhaber: Evonik Degussa GmbH, 45128 Essen (DE)
(72) Erfinder: MOUSSALLEM, Imad, Dr., 63457 Hanau (DE); LANG, Jürgen Erwin, Dr., 76229 Karlsruhe (DE); RAULEDER, Hartwig, Dr., 79618 Rheinfelden (DE); TROCHA, Martin, Dr., 45136 Essen (DE); BRAUSCH, Nicole, Dr., 45130 Essen (DE)

(56) Entgegenhaltungen:
- DE-A1-102007 007 874
- DE-A1-102013 207 444

## Beschreibung

Die Erfindung betrifft ein Verfahren und eine Vorrichtung zur Herstellung von Octachlortrisilan und Polychlorsilanen aus monomeren Chlorsilanen, indem die Chlorsilane einem nichtthermischen Plasma ausgesetzt und nicht zu Octachlortrisilan und höheren Polychlorsilanen umgesetzte Chlorsilane in das #Plasma zurückgeführt werden.

Aus dem Stand der Technik sind Verfahren zur Herstellung von Polychlorsilanen bekannt. So offenbart die DE 10 2006 034 061 A1 eine Reaktion von Siliziumtetrachlorid mit Wasserstoff zur Herstellung von Polysilanen. Aufgrund der Umsetzung in Gegenwart von Wasserstoff sind die hergestellten Polysilane wasserstoffhaltig. Um die Anlage im kontinuierlichen Betrieb halten zu können, wird Tetrachlorsilan im Überschuss in Bezug zum Wasserstoff zugesetzt. Zudem hat die offenbarte Anlage einen komplexen Aufbau und erlaubt lediglich die Herstellung von Polysilangemischen. Ein erhöhtes Molekulargewicht der Polysilane kann nur durch Hintereinanderschalten mehrerer Reaktoren und Hochfrequenzerzeuger erreicht werden. Nach dem jeweiligen Durchlaufen der hintereinandergeschalteten Plasmareaktoren erhöht sich das Molekulargewicht der Polysilane nach jedem Plasmareaktor. Das offenbarte Verfahren beschränkt sich auf die Herstellung von unzersetzt in Gasphase überführbare Verbindungen.

EP 1 264 798 A1 offenbart ein Verfahren zur Aufarbeitung von Nebenprodukten enthaltend Hexachlordisilan bei der Herstellung von polykristallinem Silizium.

Auch die US 4,542,002 und WO 2009/143823 A2 offenbaren plasmachemische Verfahren zur Herstellung von Polychlorsilanen ausgehend von Siliziumtetrachlorid und Wasserstoff. Herstellungsbedingt werden Wasserstoff enthaltende Polychlorsilane erhalten. Gemäß der WO 2009/143823 A2 werden Mischungen von Wasserstoff enthaltenden hochmolekularen Polychlorsilane erhalten. Das in den Polychlorsilanen enthaltene Siliziumtetrachlorid muss vor einer Weiterverwendung aufwendig destillativ im Vakuum entfernt werden. Besonders nachteilig im Stand der Technik ist die Notwendigkeit der Herstellung der Polychlorsilane in Gegenwart von gasförmigem Wasserstoff. Hierdurch werden sehr hohe Sicherheitsmaßnahmen an die Materialien und die Sicherung der Anlage gestellt.

Die Offenlegungsschrift DE 102007007874 A1 schlägt ein Verfahren vor, Polysilane mittels eines nichtthermischen Plasmas zu erzeugen. Das resultierende Gemisch wird aus dem Plasma in einem Kühler gesammelt und kondensiert. Nicht umgesetzte Komponenten werden nach Destillation des Octachlortrisilans ins Plasma zurück geführt.

Ein Verfahren mit Hilfe eines thermischen Plasmas zur Herstellung von Octachlortrisilan offenbart DE 102013207444 A1, wobei die dabei verwendete Vorrichtung mit einen Kondensator ausgestattet ist.

Üblicherweise werden Octachlortrisilan, im Rahmen der Erfindung mit "OCTS" abgekürzt, und höhere Polychlorsilane erzeugt, indem man ein Gasgemisch durch eine Reihe von Plasmareaktoren führt. Bei jeder Passage durch eines der Plasmen erhöht sich das mittlere Molgewicht des Gasgemisches.

Aufgabe der vorliegenden Erfindung war es daher, ein weniger aufwendiges und daher wirtschaftlicheres Verfahren zur Herstellung von hoch- bis höchstreinem Octachlortrisilan bereitzustellen, wobei auf die Verwendung von Wasserstoff als Prozessgas verzichtet wird.

Überraschend wird der Aufwand vereinfacht, indem nur ein Plasmareaktor eingesetzt wird, in den ein Teil des Gasgemisches zurückgeführt und erneut umgesetzt wird.

Im Rahmen der Erfindung werden unter "Polychlorsilane" solche Silane verstanden, deren Moleküle mindestens 2 Siliziumatome und mehr als 2 Chloratome aufweisen, und unter "höhere Polychlorsilane" solche Silane, deren Moleküle mehr als 3 Siliziumatome und mindestens 3 Chloratome aufweisen. Hexachlordisilan, im Rahmen der Erfindung abgekürzt mit "HCDS", und Octachlortrisilan, abgekürzt "OCTS", sind Beispiele für Polychlorsilane. Decachlortetrasilan, abgekürzt "DCTS", Dodecachlorpentasilan, abgekürzt "DCPS", und deren Strukturisomere sind Beispiele für höhere Polychlorsilane.

Gegenstand der Erfindung ist ein Verfahren zur Herstellung von OCTS und/oder höherer Polychlorsilane, welches dadurch gekennzeichnet ist, dass
a) in einem Gas, das sich in einem Plasmareaktor befindet und das SiCl₄, HSiCl₃, oder ein Gemisch dieser Silane enthält und auf eine Temperatur von 80 °C bis 120 °C eingestellt wird, ein nichtthermisches Plasma mittels einer Wechselspannung der Grundfrequenz f_{g} angeregt wird, wobei ein resultierendes Gemisch erhalten wird, das Hexachlordisilan, Octachlortrisilan, höhere Polychlorsilane, und die Komponenten SiCl₄ und HSiCl₃ enthält, und
b) das resultierende Gemisch aus dem Plasma in einen Kühler (Condenser mit Vakuumbehälter) gepumpt und auf eine Temperatur von höchstens 0 °C abgekühlt wird, und der Druck im Vakuumbehälter auf zumindest einen Wert im Bereich von 1 bis 10000 mbar_{abs} eingestellt wird, wobei die Komponenten SiCl₄, HSiCl₃, Hexachlordisilan, Octachlortrisilan, und/oder höhere Polychlorsilane in dem Kühler kondensiert werden, und
c) die Komponenten in einen Verdampfer (Evaporator) geführt werden, in dem Verdampfer verdampft und anschließend in das nichtthermische Plasma des Schrittes a zurückgeführt werden, und zugleich
d) die nicht zurückgeführten höheren Polychlorsilane und jeweils mindestens ein Teil des im Schritt b erhaltenen Hexachlordisilan und Octachlortrisilan in einem Sammelbehälter gesammelt werden, und das in diesem Schritt erhaltene Sumpfgemisch
e) einer Destillation unterzogen wird, wobei Hexachlordisilan abgezogen und in das nichtthermische Plasma des Schrittes a geführt wird, und
f) das nach der Destillation verbleibende Gemisch aus Octachlortrisilan und höheren Polychlorsilanen gesammelt wird.

Dieses Verfahren setzt überraschend in guter Ausbeute monomere Chlorsilane in einem nichtthermischen Plasma zu hoch- bis höchstreinem OCTS und höhere Polychlorsilan wie DCTS und DCPS um.

Ein besonders großer Vorteil des erfindungsgemäßen Verfahrens ist die unmittelbare Verwendbarkeit des hergestellten Octachlortrisilans und höherer Polychlorsilane, d.h. ohne weitere Aufreinigung, zur Abscheidung von hochreinen Siliziumschichten mit Solarsiliziumqualität oder Halbleiterqualität. Das erfindungsgemäß hergestellte Octachlortrisilan ist, vorzugsweise im Rahmen der fachüblichen Nachweisgrenze, frei von Wasserstoffatomen und/oder Wasserstoffatome enthaltenden monomeren Chlorsilanen und/oder Polychlorsilanen. Als frei von Wasserstoff gilt das Octachlortrisilan, wenn sein Gehalt an Wasserstoffatomen unter 1x10⁻³ Gew. % liegt, insbesondere unter 1x10⁻⁴ Gew.-%, weiter bevorzugt unter 1x10⁻⁶ Gew.-% bis hin zur Nachweisgrenze bei aktuell 1x10⁻¹⁰ Gew.-%. Die bevorzugte Methode zur Bestimmung des Gehaltes an Wasserstoffatomen ist die ¹H-NMR-Spektroskopie oder die CHN-Analyse, vorzugsweise in Kombination mit ICP-MS zur Bestimmung des Gesamtverunreinigungsprofils mit den weiter unten genannten Elementen.

Ein weiterer Vorteil des Verfahrens ist, dass kein Wasserstoffträgergas und auch kein zusätzlicher Katalysator eingesetzt werden muss. Somit können im Verfahren monomere Chlorsilane oder Mischungen monomerer Chlorsilane im nichtthermischen Plasma zu Octachlortrisilan umgesetzt werden, wobei keine zusätzlichen Wasserstoff enthaltenden Verbindungen, insbesondere Wasserstoff, zugesetzt werden müssen.

Ein besonderer Vorteil des Verfahrens ist die Möglichkeit der Herstellung des Produktes wie z. B. OCTS, DCTS, DCPS in Halbleiterqualität, ausgehend von höchstreinem Tetrachlorsilan (STC_{eg}), vorzugsweise im Gemisch mit einem Gehalt an höchstreinem Trichlorsilan (TCS_{eg}).

Das Verfahren wird im Folgenden näher erläutert. Das im Anschluss an Schritt a erhaltene resultierende Gemisch enthält Hexachlordisilan, Octachlortrisilan, und/oder höhere Polychlorsilane. Es kann außerdem HCl enthalten. Das resultierende Gemisch wird im Schritt b in dem Kondensatbehälter (Condenser) kondensiert. Der Kondensatbehälter ist mit einer Vakuumpumpe verbunden, mit deren Hilfe der absolute Druck in dem Plasmareaktor eingestellt wird.

Bei der Kondensation trennt sich HCl Gas einstufig ab, und es können mit dem HCl Gas Spuren von SiHCl₃, SiCl₄ mitgeschleppt werden. Die Menge mitgeschleppter TCS und STC ist abhängig von der Temperatur, auf die im Schritt b abgekühlt wird, und von dem durch die Vakuumpumpe erzeugten absoluten Druck. Im Anschluss an den Schritt b wird das Kondensat Gemisch, das die kondensierten Komponenten SiCl₄, HSiCl₃, HCDS, OCTS, und höhere Polychlorsilane enthält, in den Verdampfer (Evaporator) geführt, vorzugsweise gepumpt.

Es kann vorteilhaft sein, diese Komponenten als Flüssigkeit von dem Condenser in den Verdampfer zu dosieren. Mit einer solchen Dosierung kann ein Fallfilm erzeugt werden, über den man die Verdampfung erreicht. Je nach der für die Verdampfung eingestellten Temperatur und dem absoluten Druck, der im Verdampfer eingestellt wird, ändert sich der Anteil HCDS und OCTS in dem Strom, der in den Plasmareaktor geführt wird.

Bevorzugt wird dort die höchstmögliche Menge an SiCl₄, HSiCl₃, und HCDS verdampft und in das nichtthermische Plasma zurückgeführt. Weiterhin bevorzugt wird das Kondensat Gemisch auf die Verdampfungstemperatur von HCDS beim entsprechenden Betriebsdruck gebracht. Das bedeutet, dass beispielweise bei einer Temperatur von 100 °C dieser Druck bei mindestens 300 mbar_{abs} liegt, um die gesamte nicht umgesetzte Menge an TCS, STC und die höchstmögliche Menge an HCDS zu verdampfen. Die Brüden aus dem Verdampfer werden in das nichtthermische Plasma des Schrittes a zurückgeführt.

Der Verdampfer ist vorzugsweise als einstufiges Verdampfungsrohr, zum Beispiel als Heizrohr, Kurzwegverdampfer oder als Dünnschichtverdampfer ausgeführt.

In dem erfindungsgemäßen Verfahren wird die Temperatur der Brüden im Bereich von 80 °C bis 120 °C eingestellt.

Vorzugsweise können im Schritt c die Temperaturen im Plasmareaktor und im Verdampfer gleich eingestellt werden. Besonders bevorzugt werden die Temperaturen im Plasmareaktor und im Verdampfer jeweils gleich in einem Bereich von 80 °C bis 120 °C bei 300 mbar_{abs} eingestellt. Ganz besonders bevorzugt ist der Bereich von 100 °C bis 120 °C. In diesem Auswahlbereich der gleich eingestellten Temperaturen ist der Anteil HCDS, der im Verfahren im Kreislauf gefahren wird, überraschend hoch. Dieses nicht lineare Verhalten zeigt die **Tabelle 1.**
Grundsätzlich werden die Komponenten des resultierenden Gemisches im Schnitt b als kondensiert und die nach dem Verdampfen erhaltenen Brüden an TCS, STC, HCDS und höhere Polychlorsilane gasförmig zum Plasmareaktor Eingang zurückgeführt.

Es hat sich gezeigt, dass in dem erfindungsgemäßen Verfahren, vorzugsweise im Schritt c, die Komponenten SiCl₄, HSiCl₃ und höhere Polychlorsilane flüssig dosiert werden können. Die zudosierten Komponenten, insbesondere die höheren Polychlorsilane müssen jedoch verdampft werden, um gasförmig zu sein, bevor diese in den Plasmareaktor gelangen. Das macht ihre Dosierung in den Verdampfer vorteilhaft, der vorzugsweise als Fallfilm Verdampfer Einheit ausgeführt sein kann.

Im Schritt a wird ein nichtthermisches Plasma eingesetzt. Das nichtthermische Plasma wird in einem Plasma-Reaktor erzeugt, in dem eine plasmaelektrische Stoffumwandlung induziert wird, die auf anisothermen Plasmen basiert. Für diese Plasmen ist eine hohe Elektronentemperatur Tₑ ≥ 10⁴ K und relativ niedrige Gastemperatur T_{G} ≤ 10³ K charakteristisch. Die für die chemischen Prozesse notwendige Aktivierungsenergie erfolgt überwiegend über Elektronenstöße, und unter diesen Prozessen wird die "plasmaelektrische Stoffumwandlung" verstanden. Typische nichtthermische Plasmen können beispielsweise durch Glimmentladung, HF-Entladung, Hohlkathodenentladung oder Koronarentladung erzeugt werden. Für die Definition des nichtthermischen Plasmas und der homogenen Plasmakatalyse wird auf die einschlägige Fachliteratur verwiesen, wie beispielsweise auf "Plasmatechnik: Grundlagen und Anwendungen - Eine Einführung; Autorenkollektiv, Carl Hanser Verlag, München/Wien; 1984, ISBN 3-446-13627-4".

In den erfindungsgemäßen Schritten c und e wird Hexachlordisilan in die Plasmareaktion zurückgeführt. Das erhöht den Ertrag an hoch- oder höchstreinem OCTS und höheren Polychlorsilanen. Höchstreines Chlorsilan, insbesondere höchstreines OCTS, enthält eine Gesamtverunreinigung mit den nachstehenden Elementen kleiner gleich 50 Gew.-ppm bis 0,001 Gew.-ppt, bevorzugt sind kleiner gleich 40 Gew.-ppm bis 0,001 Gew.-ppt:
A. Aluminium von 15 Gew.-ppm bis 0,0001 Gew.-ppt, und/oder
B. Bor kleiner gleich 5 bis 0,0001 Gew.-ppt,
   bevorzugt im Bereich von 3 Gew.-ppm bis 0,0001 Gew.-ppt, und/oder
C. Calcium kleiner gleich 2 Gew.-ppm,
   bevorzugt von 2 Gew.-ppm bis 0,0001 Gew.-ppt, und/oder
D. Eisen von 5 Gew.-ppm bis 0,0001 Gew.-ppt,
   vorzugsweise von 0,6 Gew.-ppm bis 0,0001 Gew.-ppt, und/oder
E. Nickel von 5 Gew.-ppm bis 0,0001 Gew.-ppt,
   vorzugsweise von 0,5 Gew.-ppm bis 0,0001 Gew.-ppt, und/oder
F. Phosphor von 5 Gew.-ppm bis 0,0001 Gew.-ppt,
   vorzugsweise von 3 Gew.-ppm bis 0,0001 Gew.-ppt, und/oder
G. Titan kleiner gleich 10 Gew.-ppm,
   kleiner gleich 2 Gew.-ppm,
   bevorzugt von 1 Gew.-ppm bis 0,0001 Gew.-ppt,
   weiter bevorzugt von 0,6 Gew.-ppm bis 0,0001 Gew.-ppt,
   weiter bevorzugt von 0,1 Gew.-ppm bis 0,0001 Gew.-ppt, und/oder
H. Zink kleiner gleich 3 Gew.-ppm,
   bevorzugt von 1 Gew.-ppm bis 0,0001 Gew.-ppt,
   weiter bevorzugt von 0,3 Gew.-ppm bis 0,0001 Gew.-ppt, und/oder
I. Kohlenstoff,
   wobei die Konzentration von Kohlenstoff in einer im Rahmen des dem Fachmann bekannten Meßverfahrens üblichen Nachweisgrenze angestrebt wird.

Die Bestimmung der Gesamtverunreinigung mit den vorgenannten Elementen erfolgt vorzugsweise mittels ICP-MS. Insgesamt kann der Prozess kontinuierlich mittels online-Analytik überwacht werden. Die geforderte Reinheit kann mittels GC, IR, NMR, ICP-MS oder durch Widerstandsmessung bzw. GD-MS nach Abscheidung des Si überprüft werden.

Ebenso ist es von Vorteil, dass auf den Zusatz von teuren, inerten Edelgasen verzichtet werden kann. Alternativ kann ein Schleppgas, vorzugsweise ein unter Druck stehendes Inertgas, wie Stickstoff, Argon, ein anderes Edelgas oder Mischungen dieser zugesetzt werden. Das Gas kann also zumindest ein weiteres Gas enthalten, welches ausgewählt ist aus Edelgas und Stickstoff, vorzugsweise Stickstoff.

Ein weiterer Vorteil des Verfahrens ist die selektive Herstellung von höchstreinem Octachlortrisilan, das ggf. einen geringen Gehalt an höchstreinem Hexachlordisilan, höchstreinem Decachlortetrasilanen und/oder Dodecachlorpentasilan aufweist und hervorragend den Anforderungen der Halbleiterindustrie entspricht.

Die Selektivität des erfindungsgemäßen Verfahrens auf die Erzeugung von OCTS kann mit folgenden Optionen weiter verbessert werden.

In das nichtthermische Plasma, das im Schritt a mittels einer Wechselspannung der Grundfrequenz f_{g} angeregt wird, kann zumindest ein elektromagnetischer Impuls mit der Repetierrate g eingekoppelt werden, dessen Spannungskomponente eine Flankensteilheit in der ansteigenden Flanke von 10 V ns⁻¹ bis 1 kV ns⁻¹, und eine Pulsbreite b von 500 ns bis 100 µs aufweist.

Der Arbeitsdruck, bei dem die erfindungsgemäße Plasmabehandlung durchgeführt wird, liegt zwischen 1 bis 10000 mbar_{abs}, bevorzugt bei 100 bis 800 mbar_{abs}. Das eingesetzte Gasgemisch wird vorzugsweise auf eine Temperatur von -40 °C bis 200 °C, besonders bevorzugt auf 20 bis 120 °C, ganz besonders bevorzugt auf 100 bis 120 °C gebracht.

Das Paschen-Gesetz besagt, dass die Zündspannung für die Plasmaentladung im Wesentlichen eine Funktion des Produktes, p·d, aus dem Druck des Gases, p, und dem Elektrodenabstand, d, ist. Für das erfindungsgemäße Verfahren liegt dieses Produkt im Bereich von 0,001 bis 300 mm·bar, vorzugsweise von 0,01 bis 100 mm·bar, besonders bevorzugt bei 0,05 bis 10 mm·bar, insbesondere bei 0,07 bis 2 mm·bar. Die Entladung kann mittels verschiedenartiger Wechselspannungen und/oder gepulster Spannungen von 1 bis 1000 kV angeregt werden. Die Höhe der Spannung hängt in dem Fachmann bekannter Weise neben dem p·d-Wert der Entladungsanordung auch vom Prozessgas selbst ab. Besonders geeignet sind solche gepulste Spannungen, die hohe Flankensteilheiten und eine gleichzeitige Ausbildung der Entladung im gesamten Entladungsraum des Reaktors ermöglichen.

Der zeitliche Verlauf der Wechselspannung und/oder der eingekoppelten elektromagnetischen Impulse kann rechteckig, trapezförmig, gepulst oder stückweise aus einzelnen zeitlichen Verläufen zusammengesetzt sein. Wechselspannung und eingekoppelte elektromagnetischen Impulse können in jede dieser Formen des zeitlichen Verlaufs kombiniert sein.

Die Grundfrequenz f_{g} der Wechselspannung kann beim erfindungsgemäßen Verfahren in einem Bereich von 1 Hz bis 100 GHz, bevorzugt von 1 Hz bis 100 MHz liegen. Die Repetierrate g der dieser Grundfrequenz überlagerten elektromagnetischen Impulse kann in einem Bereich von 0,1 Hz bis 50 MHz, bevorzugt von 50 kHz bis 50 MHz gewählt sein. Die Amplitude dieser Impulse kann von 1 bis 15 kVₚₚ (kV peak to peak), bevorzugt von 1 bis 10 kVₚₚ, besonders bevorzugt von 1 bis 8 kVₚₚ gewählt sein.

Diese Impulse können alle dem Fachmann bekannten Formen aufweisen, z. B. Sinus, Rechteck, Dreieck, oder eine Kombination daraus. Besonders bevorzugte Formen sind Rechteck oder Dreieck.

Eine weitere Steigerung der Selektivität des erfindungsgemäßen Verfahrens auf OCTS und höhere Polychlorsilanen kann erzielt werden, wenn in dem in das Plasma eingekoppelten elektromagnetischen Impuls zumindest ein weiterer elektromagnetischer Impuls mit der gleichen Repetierrate überlagert wird, **oder** die beiden oder zumindest zwei Impulse in einem Tastverhältnis von 1 bis 1000 zueinander stehen. Bevorzugt werden beide Impulse mit rechteckiger Form gewählt, jeweils mit einem Tastverhältnis von 10 und möglichst großer Flankensteilheit. Je größer die Flankensteilheit, desto höher die Ausbeute. Die Amplitude dieser Impulse kann von 1 bis 15 kVₚₚ, bevorzugt von 1 bis 10 kVₚₚ gewählt sein.

Die Selektivität steigt mit der Repetierrate. Diese kann beispielsweise das 10-fache der Grundfrequenz f_{g} betragen.

In dem erfindungsgemäßen Verfahren kann der oder die elektromagnetischen Impulse durch ein Impulsvorschaltgerät mit Strom- oder Spannungseinprägung eingekoppelt werden. Wird der Impuls stromeingeprägt, erhält man eine größere Flankensteilheit.

In einer weiteren Ausprägung des erfindungsgemäßen Verfahrens kann der Impuls in dem Fachmann bekannter weise anstelle periodisch synchron auch transient asynchron eingekoppelt werden.

In einer weiteren Ausprägung des erfindungsgemäßen Verfahrens kann der Reaktor mit röhrenförmigem dielektrischem Material bestückt sein, um inhomogene Felder im Reaktionsraum und somit unkontrollierte Umsetzung zu verhindern. Vorzugsweise ist das Verhältnis Reaktorrohrdurchmesser zu dessen Länge 300 mm/700 mm bei 50 Rohren. Weiterhin bevorzugt bilden der Reaktor mit dem niederkapazitativen dielektrischen Material und das hochohmig und breitbandig ausgelegte Vorschaltgerät eine Einheit.

In dem erfindungsgemäßen Verfahren können in dem Reaktor Rohre eingesetzt werden, die durch Spacer aus inertem Material gehaltert und auf Abstand gehalten sind. Mit solchen Spacern werden Fertigungstoleranzen der Rohre ausgeglichen und zugleich ihre Beweglichkeit im Reaktor minimiert.

Es kann ebenfalls vorteilhaft sein, in dem erfindungsgemäßen Verfahren Spacer aus einem low-κ-Material einzusetzen. Besonders bevorzugt kann dem Fachmann bekanntes Teflon eingesetzt werden.

Es kann weiterhin vorteilhaft sein, im Schritt b des Verfahrens den Druck im Vakuumbehälter auf 1 mbar_{abs} bis 1000 mbar_{abs} einzustellen. Niedrige Drücke haben den Vorteil, dass das nichtthermische Plasma weniger Filamente ausbildet, so dass das Plasma homogener ist. Je homogener das Plasma ist, desto weniger Silizium Feststoffe werden in dem Verfahren erzeugt.

Keine Feststoffe oder besonders wenig Silizium Feststoff Anteil wird bei Drücken von 1 bis 600 mbar_{abs} erhalten.

Weiterhin kann es vorteilhaft sein, im Schritt b die Temperatur im Bereich von -60°C bis 0 °C einzustellen. Vorzugsweise wird im Schritt b des Verfahrens das gesamte resultierende Gemisch aus dem Plasmareaktor kondensiert. Dieses Gasgemisch ist auf seine Kondensationstemperatur zu kühlen. Beispielsweise liegt bei 300 mbar_{abs} die Siedetemperatur des Trichlorsilan (TCS) bei 0 °C. Deshalb wird die Temperatur in dem Kondensatbehälter auf 0 °C oder tiefer gekühlt.

In den erfindungsgemäßen Schritten c und e wird Hexachlordisilan innerhalb fachüblicher Meßungenauigkeiten vorzugsweise vollständig in die Plasmareaktion zurückgeführt, um so den Ertrag an OCTS und höheren Polychlorsilanen noch weiter zu erhöhen.

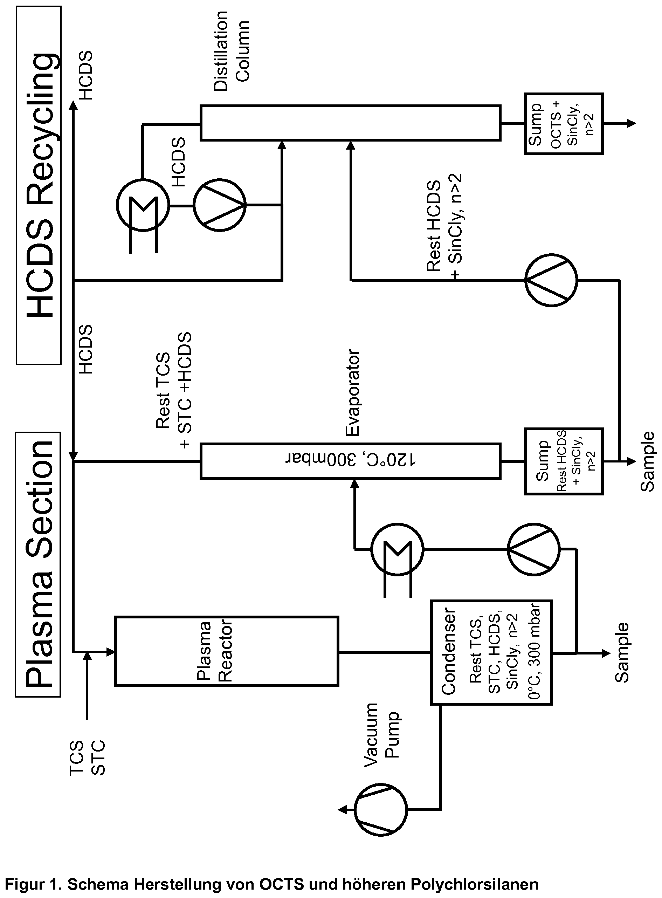

Das erfindungsgemäße Verfahren kann in einer Vorrichtung durchgeführt werden, die in **Figur 1** schematisch dargestellt ist. Der Kühler ist auf eine dem Fachmann bekannte Art und Weise als Condenser mit Vakuumbehälter ausgeführt.

Dem Plasmareaktor (Plasma reactor), in dem ein nichtthermisches Plasma erzeugt wird, sind ein Kühler (Condenser mit Vakuumbehälter), ein Verdampfer (Evaporator), und eine Destillationskolonne (Distillation Column) zugeordnet. An den Verdampfer schließt sich ein Sammelbehälter (Sump) an. Das im Schritt d des erfindungsgemäßen Verfahrens erhaltene und im Sammelbehälter gesammelte Sumpfgemisch wird in der Destillationskolonne (Distillation Column) einer Destillation unterzogen. Der Eingang des Plasmareaktors ist mit der Rückführung der Komponenten SiCl₄, HSiCl₃, und einem Teil der höheren Polychlorsilane, sowie der Rückführung des aus der Destillationskolonne abgezogenen Hexachlordisilan verbunden.

Das erfindungsgemäße Verfahren wird im Folgenden anhand eines Beispiels erläutert.

### Beispiel: Einfluss der Temperatur im Plasmareaktor und Verdampfer auf die Mengen an zurückgeführtem HCDS, OCTS und höheren Polychlorsilanen.

In einem 15 Rohre Plasmareaktor mit einem Gas aus SiCl₄ und HSiCl₃ wurde ein nichtthermisches Plasma mittels einer WEDECO EFFIZON® Generator (Ozonerzeuger der SWO-GSO-Baureihe) mit einer Wechselspannung der Grundfrequenz f_{g} von 927 Hz angeregt, gemessen mit dem Digitaloszilloskop Typ DSO1022A Von Agilent und Hochspannungstastkopf Typ PHV4002-3 von PMK. Es wurde ein Gemisch aus Hexachlordisilan, Octachlortrisilan, höheren Polychlorsilanen und den anfangs eingesetzten Silanen erhalten. Dieses Gemisch wurde aus dem Plasma in einen Kühler gepumpt und auf eine Temperatur von 0 °C abgekühlt, wobei SiCl₄, SiHCl₃, Hexachlordisilan, Octachlortrisilan, und höhere Polychlorsilane in dem Kühler kondensierten. Ein Teil des Gemisches wurde über einen Verdampfer (Evaporator) in das nichtthermische Plasma zurückgeführt. Der verbliebene Teil der nicht zurückgeführten höheren Polychlorsilane und ein Teil des Hexachlordisilan und Octachlortrisilan wurden in einem Sammelbehälter gesammelt. Das somit erhaltene Sumpfgemisch wurde destilliert, wobei Hexachlordisilan abgezogen und in das nichtthermische Plasma zurückgeführt wurde. Das nach der Destillation verbleibende Gemisch enthielt Octachlortrisilan und höhere Polychlorsilane und wurde in einem Sammelbehälter gesammelt.

Der Druck im Vakuumbehälter betrug 300 mbar_{abs}.

Im Rahmen der Erfindung bedeuten Angaben mit der Einheit "g/m²h" die Masse erzeugten Silans oder Silane pro Stunde und Quadratmeter Oberfläche der das nichtthermische Plasma erzeugenden Elektroden.

Die **Tabelle 1** zeigt die während der Durchführung des erfindungsgemäßen Verfahrens gemessenen Massen an Silanen mit zwei (Si=2), drei (Si=3), vier (Si=4) bzw. fünf (Si=5) Siliziumatomen als Funktion der im Verdampfer eingestellten Temperatur in °C. Die Menge wurde ausgewogen und die Anteile mit einer Gaschromatographie abgestimmt. Zusätzlich ist die Summe der Massen an Silanen mit mehr als zwei Siliziumatomen eingetragen (∑Si>2).

**Tabelle 1.**

| Verdampfer & Plasma Reaktor Temperatur/°C bei 300 mbarabs | Konzentration in Kreislauf/Gew.-% | | Produktion/g/m²h | | | | | Brüden Temperatur/°C |
|---|---|---|---|---|---|---|---|---|
| | HCDS | OCTS | HCDS | OCTS | Si=4 | Si=5 | ∑Si>2 | |
| 60 | < 0,5 | <0,1 | 183 | 84 | 25 | 3 | 112 | 30 |
| 80 | < 0,5 | <0,1 | 190 | 97 | 43 | 13 | 153 | 30 |
| 100 | < 0,5 | <0,1 | 181 | 96 | 42 | 15 | 152 | 30 |
| 120 | ∼6 | ∼ 1 | 95 | 91 | 95 | 44 | 230 | 80 |
| 140 | > 6 | ∼2 | 101 | 49 | 69 | 53 | 172 | 105 |
| 160 | > 6 | ∼2 | 108 | 47 | 25 | 30 | 102 | 130 |

### Beispiel a: Herstellung von HCDS und OCTS mit hohen Ausbeuten.

Im Verdampfer und im Plasmareaktor wurde die Temperatur auf 80°C eingestellt. Es wurden folgende Silan Konzentrationen im Kreislauf Strom gefunden.

Silane mit Si=2: unter 0,5 Gew.-%, und mit Si=3: unter 0,1 Gew.-%.

| | |
|---|---|
| Si=2: | 190 g/m²h |
| Si=3: | 97 g/m²h |
| S=4: | 43 g/m²h |
| Si=5: | 13 g/m²h |

### Beispiel b. Herstellung von OCTS und DCTS mit hohen Ausbeuten

Wie im Beispiel a, jedoch wurde im Verdampfer und im Plasmareaktor die Temperatur auf 120°C eingestellt. Es wurden folgende Silan Konzentrationen im Kreislauf Strom gefunden.

Silane mit Si=2: etwa 6 Gew.-%, und mit Si=3: etwa 1 Gew.-%.

| | |
|---|---|
| Si=2: | 95 g/m²h |
| Si=3: | 91 g/m²h |
| S=4: | 95 g/m²h |
| Si=5: | 44 g/m²h |

Im Vergleich bei verschiedenen Temperaturen wurde gefunden, dass bei einer Erhöhung der im Plasmareaktor und im Verdampfer gleich eingestellten Temperatur von 60 auf 120 °C die erzeugten Massen von Silanen mit mehr als zwei Siliziumatomen (∑Si>2) von 112 auf 226 g/m²h anstieg, während zugleich die Masse an HCDS von 182 auf 54 g/m²h gesunken ist.

Es wurde außerdem gefunden, dass in dem Bereich der Temperaturen von etwa 100 °C und 140 °C in dem Kreislauf an HCDS, der durch das erzeugte und zurück geführte HCDS gebildet wurde, der prozentuale Massenanteil an umlaufendem HCDS auf 6 Gew.-% angestiegen war - verglichen mit dem Bereich an Temperaturen von 60 °C bis 100 °C, in welchem dieser Anteil unter 0,5 Gew.-% lag.

Des Weiteren wurde beobachtet, dass durch Veränderungen des Druckes die Verweilzeit im Plasma, die Homogenität des Plasmas sowie die erforderlichen Temperaturen im Verdampfer beeinflusst waren. Ohne an eine bestimmte Theorie gebunden zu sein, nehmen die Erfinder an:
(1) Mit dem Druck ändern sich die Geschwindigkeitsverteilung im Gas und die Verweilzeit im Plasmareaktor. Höhere Drücke verursachen höhere Verweilzeiten in der Plasmazone. Das erhöht die Erzeugung bzw. Selektivität höherer Polychlorsilane.
(2) Andererseits bildet das Plasma bei höherem Druck mehr Filamente aus. Dadurch kommt es zur Entstehung von mehr Silizium Feststoffen.
(3) Bei höherem Druck ist eine höhere Temperatur im Verdampfer einzustellen, um die Menge an hergestelltem HCDS im Kreislauf zu fahren was zu einer thermischen Belastung und Zersetzung der höhere Polychlorsilan ausführen könnten.

## Patentansprüche

1. Verfahren zur Herstellung von Octachlortrisilan und/oder höherer Polychlorsilane,
**dadurch gekennzeichnet, dass**
a) in einem Gas, das sich in einem Plasmareaktor befindet und das SiCl₄, HSiCl₃, oder ein Gemisch dieser Silane enthält
und auf eine Temperatur von 80 °C bis 120 °C eingestellt wird,
ein nichtthermisches Plasma mittels einer Wechselspannung der Grundfrequenz f_{g} angeregt wird, wobei
ein resultierendes Gemisch erhalten wird, das
Hexachlordisilan, Octachlortrisilan, höhere Polychlorsilane, sowie SiCl₄ und HSiCl₃ enthält, und
b) das resultierende Gemisch aus dem Plasma in einen Kühler (Condenser mit Vakuumbehälter) gepumpt und auf eine Temperatur von höchstens 0 °C abgekühlt wird, und
der Druck im Vakuumbehälter auf zumindest einen Wert im Bereich von 1 bis 10000 mbar_{abs} eingestellt wird,
wobei die Komponenten SiCl₄, HSiCl₃, Hexachlordisilan, Octachlortrisilan, und/oder höhere Polychlorsilane in dem Kühler kondensiert werden, und
c) die Komponenten in einen Verdampfer (Evaporator) geführt werden, in dem Verdampfer verdampft und anschließend
in das nichtthermische Plasma des Schrittes a zurückgeführt werden, und zugleich
d) die nicht zurückgeführten höheren Polychlorsilane und jeweils mindestens ein Teil des im Schritt b erhaltenen Hexachlordisilan und Octachlortrisilan in einem Sammelbehälter gesammelt werden, und
das in diesem Schritt erhaltene Sumpfgemisch
e) einer Destillation unterzogen wird, wobei Hexachlordisilan abgezogen und in das nichtthermische Plasma des Schrittes a geführt wird, und
f) das nach der Destillation verbleibende Gemisch aus Octachlortrisilan und höheren Polychlorsilanen gesammelt wird.

2. Verfahren nach Anspruch 1, wobei im Schritt c die Temperaturen im Plasmareaktor und im Verdampfer gleich eingestellt werden.

3. Verfahren nach Anspruch 1, wobei im Schritt a
in das Plasma zumindest ein elektromagnetischer Impuls mit der Repetierrate g eingekoppelt wird,
dessen Spannungskomponente eine Flankensteilheit in der ansteigenden Flanke von 10 V ns⁻¹ bis 1 kV ns⁻¹, und der eine Pulsbreite b von 500 ns bis 100 µs aufweist.

4. Verfahren nach Anspruch 3,
**dadurch gekennzeichnet,**
**dass** die Grundfrequenz f_{g} der Wechselspannung von 1 Hz bis 100 MHz,
die Repetierrate g von 0,1 Hz bis 50 MHz, und
die Amplitude von 1 bis 15 kVₚₚ beträgt.

5. Verfahren nach Anspruch 3,
**dadurch gekennzeichnet,**
**dass** dem in das Plasma eingekoppelten elektromagnetischen Impuls zumindest ein weiterer elektromagnetischer Impuls mit der gleichen Repetierrate überlagert wird, und die beiden oder zumindest zwei Impulse in einem Tastverhältnis von 1 bis 1000 zueinander stehen.

6. Verfahren nach Anspruch 3,
**dadurch gekennzeichnet,**
**dass** zumindest ein elektromagnetischer Impuls durch ein Impulsvorschaltgerät mit Strom- oder Spannungseinprägung eingekoppelt wird.

7. Verfahren nach Anspruch 1, wobei
im Schritt b eine Temperatur im Bereich von -60 °C bis 0 °C eingestellt wird.

8. Verfahren nach Anspruch 1, wobei das Gas zumindest ein weiteres Gas enthält, ausgewählt aus Edelgas oder Stickstoff.

## Claims

1. Process for preparing octachlorotrisilane and/or higher polychlorosilanes,
**characterized in that**
a) a nonthermal plasma is formed by excitation by means of an AC voltage of base frequency f_{g} in a gas which is within a plasma reactor and which comprises SiCl₄, HSiCl₃, or a mixture of these silanes,
and is adjusted to a temperature of 80°C to 120°C,
to obtain a resulting mixture comprising hexachlorodisilane, octachlorotrisilane, higher polychlorosilanes, and also SiCl₄ and HSiCl₃, and
b) the resulting mixture is pumped out of the plasma into a cooler (condenser with vacuum vessel) and cooled down to a temperature of not more than 0°C, and the pressure in the vacuum vessel is set to at least one value in the range from 1 to 10000 mbar abs,
condensing out the SiCl₄, HSiCl₃, hexachlorodisilane, octachlorotrisilane and/or higher polychlorosilane components in the cooler, and
c) the components are conducted into an evaporator, evaporated in the evaporator and then
recycled into the nonthermal plasma of step a, and at the same time
d) the non-recycled higher polychlorosilanes and at least a portion each of the hexachlorodisilane and octachlorotrisilane obtained in step b
are collected in a collecting vessel, and
the bottoms mixture obtained in this step
e) is subjected to a distillation, wherein hexachlorodisilane is drawn off and conducted into the nonthermal plasma of step a, and
f) the mixture of octachlorotrisilane and higher polychlorosilanes which remains after the distillation is collected.

2. Process according to Claim 1, wherein the temperatures set in the plasma reactor and in the evaporator in step c are the same.

3. Process according to Claim 1, wherein, in step a,
at least one electromagnetic pulse with repetition rate g injected into the plasma
has a voltage component having an edge slope in the rising edge of 10 V ns⁻¹ to 1 kV ns⁻¹, and has a pulsewidth b of 500 ns to 100 µs.

4. Process according to Claim 3, **characterized in that** the base frequency f_{g} of the AC voltage is from 1 Hz to 100 MHz,
the repetition rate g is from 0.1 Hz to 50 MHz, and the amplitude is from 1 to 15 kV_{pp.}

5. Process according to Claim 3,
**characterized in that**
the electromagnetic pulse injected into the plasma is superimposed with at least one further electromagnetic pulse with the same repetition rate, and the two or at least two pulses are in a duty ratio of 1 to 1000 relative to one another.

6. Process according to Claim 3,
**characterized in that**
at least one electromagnetic pulse is injected by means of a pulse ballast with current or voltage impression.

7. Process according to Claim 1, wherein
a temperature in the range from -60°C to 0°C is set in step b.

8. Process according to Claim 1, wherein the gas comprises at least one further gas selected from noble gas and nitrogen.

## Revendications

1. Procédé pour la production d'octachlorotrisilane et/ou de polychlorosilanes supérieurs, **caractérisé en ce que**
a) dans un gaz, qui se trouve dans un réacteur à plasma et qui contient SiCl₄, HSiCl₃ ou un mélange de ces silanes
et qui est réglé à une température de 80°C à 120°C, un plasma non thermique est excité au moyen d'une tension alternative présentant la fréquence de base f_{g},
un mélange résultant étant obtenu, qui
contient de l'hexachlorodisilane, de l'octachlorotrisilane, des polychlorosilanes supérieurs ainsi que SiCl₄ et HSiCl₃, et
b) le mélange résultant est pompé hors du plasma dans un refroidisseur (condenseur avec un récipient sous vide) et refroidi à une température d'au plus 0°C et
la pression dans le récipient sous vide est réglée à au moins une valeur dans la plage de 1 à 10.000 mbars_{abs},
les composants SiCl₄, HSiCl₃, hexachlorodisilane, octachlorotrisilane et/ou polychlorosilanes supérieurs étant condensés dans le refroidisseur et
c) les composants sont guidés dans un évaporateur, évaporés dans l'évaporateur et ensuite
recyclés dans le plasma non thermique de l'étape a et simultanément
d) les polychlorosilanes supérieurs non recyclés et à chaque fois
au moins une partie de l'hexachlorodisilane et de l'octachlorotrisilane obtenus dans l'étape b sont rassemblés dans un récipient de collecte et
le mélange de fond obtenu dans cette étape
e) est soumis à une distillation, l'hexachlorodisilane étant soutiré et guidé dans le plasma non thermique de l'étape a et
f) le mélange d'octachlorotrisilane et des polychlorosilanes supérieurs qui reste après la distillation est rassemblé.

2. Procédé selon la revendication 1, où, dans l'étape c, les températures dans le réacteur à plasma et dans l'évaporateur sont réglées à la même valeur.

3. Procédé selon la revendication 1, où, dans l'étape a
au moins une impulsion électromagnétique présentant un taux de répétition g est couplé dans le plasma,
dont la composante de tension présente une pente de flanc dans le flanc ascendant de 10 V ns⁻¹ à 1 kV ns⁻¹ et qui présente une largeur d'impulsion b de 500 ns à 100 µs.

4. Procédé selon la revendication 3, **caractérisé en ce que**
la fréquence de base f_{g} de la tension alternative est de 1 Hz à 100 MHz,
le taux de répétition g est de 0,1 Hz à 50 MHz et l'amplitude est de 1 à 15 kVₚₚ.

5. Procédé selon la revendication 3, **caractérisé en ce que** l'impulsion électromagnétique couplée dans le plasma est superposée par au moins une autre impulsion électromagnétique présentant le même taux de répétition et les deux impulsions ou lesdites au moins deux impulsions se trouvent dans un rapport de cycle de 1 à 1000 l'une par rapport à l'autre.

6. Procédé selon la revendication 3, **caractérisé en ce qu'**au moins une impulsion électromagnétique est couplée par un régulateur d'impulsion en mode courant ou en mode tension.

7. Procédé selon la revendication 1, où, dans l'étape b, une température dans la plage de -60°C à 0°C est réglée.

8. Procédé selon la revendication 1, le gaz contenant au moins un autre gaz choisi parmi un gaz noble ou l'azote.
